# FASCICULE DE BREVET EUROPEEN

(11) **EP 4 010 106 B1**
(45) Date de publication et mention de la délivrance du brevet: **05.06.2024**
(21) Numéro de dépôt: 20744064.5
(22) Date de dépôt: 29.07.2020
(51) Int. Cl.: B01D 53/14

(54) **PROCÉDÉ DE TRAITEMENT DE GAZ PAR ABSORPTION UTILISANT UNE RÉGÉNÉRATION DU SOLVANT PAR FLASH CHAUD OPTIMISÉE THERMIQUEMENT**
VERFAHREN ZUR GASBEHANDLUNG DURCH ABSORPTION UNTER VERWENDUNG VON THERMISCH OPTIMIERTER HEISS-FLASH-LÖSUNGSMITTELREGENERIERUNG
METHOD FOR TREATING GAS BY ABSORPTION USING THERMALLY OPTIMISED HOT FLASH SOLVENT REGENERATION

(30) Priorité: 08.08.2019 FR 1909063
(43) Date de publication de la demande: 15.06.2022
(73) Titulaire: IFP Energies nouvelles, 92852 Rueil-Malmaison Cedex (FR)
(72) Inventeur: CARLIER, Vincent, 92852 RUEIL-MALMAISON CEDEX (FR)
(74) Mandataire: IFP Energies nouvelles
(86) Numéro de dépôt international: PCT/EP2020/071331
(87) Numéro de publication internationale: WO 2021/023588

(56) Documents cités:
- FR-A1- 2 507 499
- FR-A1- 2 911 516
- US-A1- 2008 184 887
- US-B1- 8 080 089

## Description

### Domaine technique

La présente invention concerne le domaine du traitement de gaz, plus particulièrement la présente invention concerne un procédé de traitement de gaz par absorption (chimique, physique ou hybride) utilisant une régénération du solvant par flash chaud. Ce type de régénération se limite habituellement aux applications pour lesquelles une régénération partielle du solvant est jugée suffisante pour atteindre les spécifications du gaz traité.

Les domaines visés sont alors essentiellement les cas de décarbonatation (gaz naturel, biogaz, syngaz, captage CO₂ de fumées industrielles issues d'incinérateurs, de centrales charbon, de haut-fourneaux, ...).

Les cas impliquant des spécifications dites sévères (H₂S, COS, mercaptans, SOₓ, NOₓ, ...) nécessitent généralement la mise en place d'une régénération plus poussée du solvant par effet d'entraînement à la vapeur (plus communément appelé « stripping » ou stripage à la vapeur, c'est-à-dire un procédé d'extraction des composés volatils par entraînement à l'aide d'un gaz inerte) dans un régénérateur pour atteindre la qualité de solvant pauvre requise. Le mode de régénération par flash chaud s'avère généralement inadapté pour ces cas.

### Technique antérieure

Une installation de traitement de gaz par absorption par un solvant, de préférence par les amines, est constituée, classiquement, de deux réacteurs chimiques, l'absorbeur et le régénérateur. Dans l'absorbeur, le flux descendant de solvant rencontre le flux ascendant d'un mélange gazeux, et se combine avec les gaz acides qu'il contient. Le mélange gazeux « adouci » sort de l'absorbeur débarrassé de ses composés à éliminer, le solvant « riche » entraîne avec lui les gaz acides. Dans le régénérateur, le solvant riche peut être régénéré par stripage, c'est-à-dire chauffé successivement dans un strippeur (évaporateur) et un bouilleur pour que s'évacuent des vapeurs riches en acides ou être régénéré par flash chaud, c'est à dire passer directement dans le rebouilleur, puis subir un flash chaud pour être débarrassé des composés gazeux désorbés. Le solvant, devenu « pauvre » en gaz acides, est refroidi par le solvant riche issu de l'absorbeur. Le solvant pauvre froid peut alors retourner dans l'absorbeur afin de laver le gaz.

Comme tout procédé, les défis des procédés de traitement de gaz par absorption sont le coût d'investissement de l'installation (CAPEX) ainsi que les coûts d'exploitation (OPEX). Les procédés d'absorption utilisant une simple régénération par flash chaud sont connus de l'homme du métier et répondent en partie à ces défis : en comparaison au procédé avec régénération par stripage, le coût d'investissement est limité (pas de colonne de régénération entre autres) et la consommation énergétique du procédé (puissance du rebouilleur) peut être sensiblement réduite (ce qui constitue le principal poste des coûts d'exploitation du procédé).

Le mode de régénération par flash chaud se limite généralement aux domaines d'applications pour lesquels une régénération non poussée du solvant est suffisante. Autrement dit, de très faibles teneurs résiduelles en gaz acides (CO₂, H₂S) dans le solvant pauvre ne sont pas requises pour atteindre les spécifications visées dans le gaz traité (cas de décarbonatation avec une spécification non contraignante : gaz naturel, biogaz, captage CO₂ dans les fumées industrielles ...).

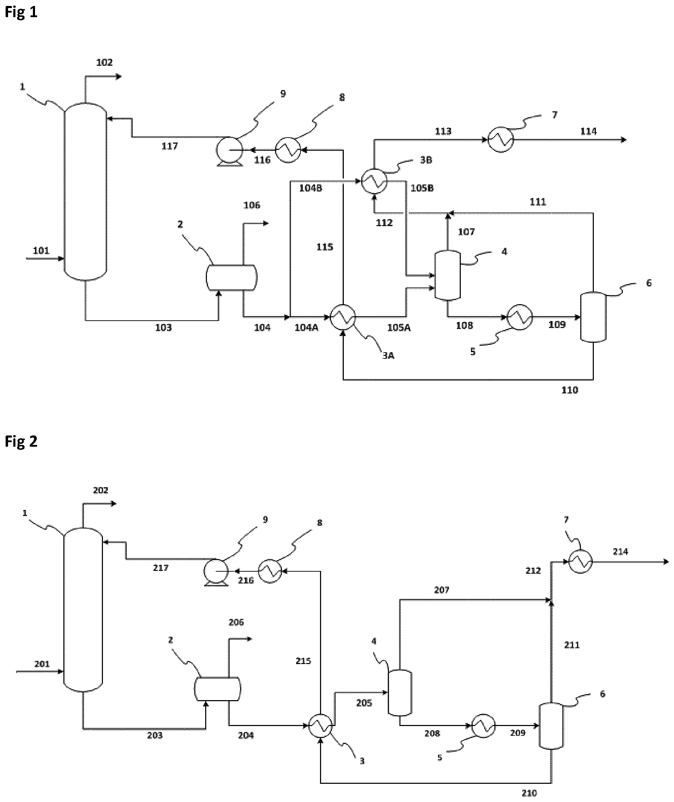

L'intégration thermique associée à ce mode de régénération par flash chaud est généralement limitée. Elle se traduit par l'installation d'un échangeur thermique de type charge/effluent permettant de réchauffer le solvant riche froid provenant de la section d'absorption à partir du solvant pauvre chaud sortant de la section de régénération. Un exemple est donné sur la **Figure 2** (détaillée dans la suite de la description) pour le cas d'une décarbonatation d'un gaz naturel visant une spécification gazoduc (généralement 2.5%vol CO₂). Sur cet exemple, les calories de l'effluent CO₂ chaud et saturé en eau provenant de la section de régénération ne sont pas valorisées. La chaleur de refroidissement de l'effluent gazeux est habituellement dissipée à l'aide d'aéroréfrigérants ou de refroidisseurs à eau.

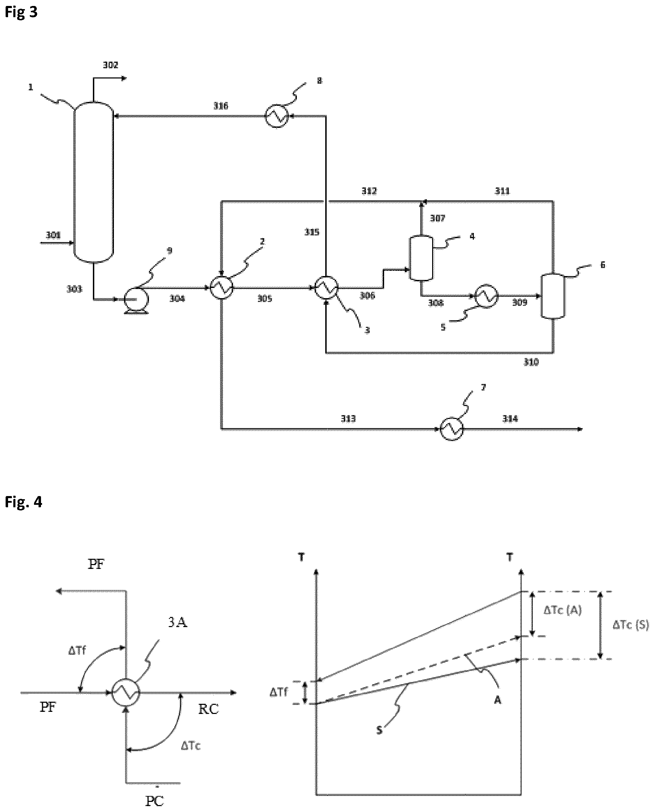

La société Hitachi Zosen Inova (HZI) propose pour les applications d'épuration de biogaz de récupérer la chaleur de l'effluent CO₂ en plus de la chaleur du solvant pauvre chaud (voir **Figure 3**, décrit en détail dans la suite de la description). Néanmoins l'agencement proposé des échangeurs n'est pas jugé optimal. En effet, l'emplacement de l'échangeur CO₂/solvant riche tel que décrit (i.e. en amont de l'échangeur solvant riche/solvant pauvre) réduit la récupération de chaleur du solvant pauvre et pénalise par conséquent l'intégration thermique du procédé.

Le document WO 2019/053367 (Air Liquide) propose de son côté, également pour les applications d'épuration de biogaz, l'utilisation d'une pompe à chaleur (PAC) pour réduire la consommation thermique du procédé. Néanmoins la consommation électrique du procédé et le coût d'investissement de l'installation sont sensiblement augmentés (via le compresseur de la pompe à chaleur).

On constate alors qu'à ce jour, il n'existe pas de solution totalement satisfaisante aux problèmes suivants : réduire sensiblement la consommation thermique d'un procédé d'absorption sans pour autant augmenter la consommation électrique et le coût d'investissement de l'installation.

La présente invention répond à ce problème technique en proposant une régénération du solvant par flash chaud associée à une intégration thermique adaptée. L'invention est décrite de manière détaillée ci-après.

Dans la suite de la description, on entend par « échangeur thermique » ou « échangeur de chaleur » ou plus simplement « échangeur » tout dispositif permettant de transférer de l'énergie thermique d'un fluide vers un autre sans les mélanger. L'échange thermique peut être réalisé de manière indirecte, au moyen d'une surface d'échange séparant les fluides. Dans ce cas, le flux thermique traverse la surface d'échange qui sépare les fluides.

Dans la suite de la description, sauf indication contraire, la pression est une pression absolue exprimée en bars.

### Résumé de l'invention

L'invention concerne un procédé de traitement de gaz par absorption chimique, physique ou hybride de composés à éliminer comprenant au moins :
a) Une étape d'absorption desdits composés à éliminer dans un absorbeur **1** par mise en contact d'un flux de gaz à traiter **101** et d'un flux de solvant à une température de préférence comprise entre 20 et 60°C, dit « solvant pauvre » **117** pour obtenir un gaz traité **102** et un solvant enrichi en composés à éliminer dit « solvant riche » **103** ;
b) Une étape de séparation optionnelle du solvant riche **103** dans un ballon de flash à moyenne pression **2** pour désorber les composés co-absorbés **106** et obtenir un solvant riche froid **104** à une température de préférence comprise entre 40 et 80°C ;
c) Une étape d'échange de chaleur entre une fraction **104A** du flux de solvant riche froid **104** et le flux de solvant pauvre chaud **110** dans un échangeur thermique **3A** pour obtenir un flux de solvant riche réchauffé **105A,** à une température de préférence comprise entre 60 et 170°C, de manière très préférée entre 100 et 130°C, et un flux de solvant pauvre refroidi **115** à une température de préférence comprise entre 45 et 90°C, de manière très préférée entre 60 et 90°C
d) Une étape d'échange de chaleur entre la fraction complémentaire **104B** du flux de solvant riche froid **104** et l'effluent de gaz désorbés chaud **112** correspondant au flux de gaz désorbés **111** issu de la séparation par flash de l'étape g) et au flux de composés gazeux **107** issus de la séparation par flash optionnelle de l'étape e) dans un échangeur thermique **3B** pour obtenir un flux de solvant riche réchauffé **105B** à une température de préférence comprise entre 60 et 170°C, de manière très préférée entre 100 et 130°C,et un flux de gaz désorbés refroidis **113** à une température de préférence comprise entre 45 et 90°C, de manière très préférée entre 60 et 90°C
e) Une étape de séparation optionnelle dans un ballon de flash à basse pression **4** des flux de solvant riche réchauffé **105A** et **105B** à la sortie des étapes d'intégration thermique permettant la séparation des composés gazeux **107** à une température de préférence comprise entre 60 et 170°C, de manière très préférée entre 100 et 130°C et d'un flux de solvant riche **108,** à une température de préférence comprise entre 60 et 170°C, de manière très préférée entre 100 et 130°C ;
f) Une étape de régénération du solvant riche **108** par chauffage dans un rebouilleur **5** à une température comprise de préférence entre 70 et 180°C pour obtenir un solvant régénéré biphasique **109**
g) Une étape de séparation dans un ballon de flash à basse pression **6** du solvant régénéré biphasique **109** permettant de séparer un flux de solvant pauvre chaud **110** à une température de préférence comprise entre 70 et 180°C, de manière très préférée entre 110 et 140°C et un flux gazeux comprenant les composés à éliminer sous forme de gaz désorbés **111** à une température de préférence comprise entre 70 et 180°C, de manière très préférée entre 110 et 140°C.
h) Un refroidissement final du solvant pauvre refroidi **115** pour obtenir un flux de solvant pauvre complètement refroidi **116** à une température de préférence comprise entre 20 et 60°C prêt à alimenter de nouveau l'absorbeur **1** sous forme d'un flux de solvant pauvre **117.**

La fraction **104A** du flux de solvant riche froid envoyée dans l'échangeur thermique **3A** peut représenter entre 0,5% et 50% poids, de préférence entre 5 et 40% poids du flux total de solvant riche.

La séparation dans le ballon de flash moyenne pression de l'étape b) peut être effectuée à une pression supérieure à celle de la séparation dans le ballon de flash basse pression, comprise entre 3 et 10 bar, de préférence entre 5 et 10 bar, de manière très préférée entre 5 et 7 bar.

La séparation dans le ballon de flash basse pression des étapes e) et g) peut être effectuée à une pression comprise entre 0 et 9 bar, de préférence entre 1 et 4 bar.

Dans un mode de réalisation, la séparation dans les ballons de flash basse pression des étapes e) et g) est effectuée à la même pression comprise entre 1 et 4 bar et la séparation dans le ballon de flash moyenne pression de l'étape b) est effectuée à une pression comprise entre 5 et 10 bar.

Dans un mode de réalisation, le chauffage dans le rebouilleur de l'étape f) et la séparation dans le ballon de flash basse pression de l'étape g) sont effectués à une pression strictement comprise entre 0 et 1 bar. La température dans le rebouilleur est alors comprise entre 70 et 100°C.

Dans un autre mode de réalisation, la pression opératoire dans le rebouilleur est comprise entre 1 et 9 bar, de préférence entre 1 et 4 bar, et la température dans le rebouilleur est comprise entre 100 et 140°C, de préférence entre 110 et 140°C.

Le solvant peut être un solvant chimique comprenant au moins une amine.

De préférence, le solvant comprend un mélange d'amines tertiaires et secondaires.

Le procédé peut comprendre une étape i) de condensation finale du flux de gaz désorbés **113** visant à limiter les pertes en eau du procédé permettant d'obtenir un flux **114** de composés désorbés refroidis, à une température de préférence comprise entre 20 et 60°C.

Dans l'étape d'absorption a) la pression opératoire peut être comprise entre 1 et 80 bar.

Le gaz à traiter peut être choisi parmi un biogaz, un gaz naturel, un gaz de synthèse (syngas), ou des fumées industrielles, par exemple des fumées de centrale à charbon, d'incinérateur ou de hauts fourneaux.

L'invention concerne également une installation de traitement de gaz permettant la mise en oeuvre du procédé selon l'invention comprenant au moins :
- Un absorbeur **1** permettant la mise en contact du gaz à traiter et d'un solvant dit « solvant pauvre » pour obtenir un gaz traité et solvant enrichi en composés à éliminer dit « solvant riche »
- Un ballon **2** optionnel de flash à moyenne pression du solvant riche pour désorber les composés co-absorbés
- Un échangeur thermique solvant riche froid / solvant pauvre chaud **3A**
- Un échangeur thermique solvant riche froid / effluent de gaz chaud **3B**
- Une conduite de court-circuit d'une fraction du solvant riche froid alimentant l'échangeur thermique solvant riche froid / solvant riche chaud **3A** vers l'échangeur thermique solvant riche froid / effluent de gaz chaud **3B**
- Un ballon de flash à faible pression **4** optionnel à la sortie des étapes d'intégration thermique permettant le dégazage du solvant riche
- Un rebouilleur **5** permettant de chauffer le solvant riche
- Un ballon de flash à faible pression **6** permettant de séparer le solvant régénéré et les composés à éliminer sous forme de gaz désorbés
- Un condenseur final **7** optionnel des gaz désorbés visant à limiter les pertes en eau et en solvant du procédé
- Un refroidisseur final **8** du solvant pauvre
- Un ensemble de pompes de solvant (pauvre et/ou riche) **9** permettant la circulation du solvant.

L'échangeur thermique **3A** et l'échangeur thermique **3B** peuvent être constitués par un seul et même appareil.

### Liste des figures

D'autres caractéristiques et avantages du procédé et de l'installation selon l'invention, apparaîtront à la lecture de la description ci-après d'exemples non limitatifs de réalisations, en se référant aux figures 1 et 4 annexées et décrites ci-après.

La Figure 1 représente le schéma de principe du procédé selon l'invention (exemple d'application de décarbonatation d'un gaz naturel).

Le procédé proposé selon l'invention **(****Figure 1****)** consiste à traiter un gaz par absorption dans un solvant physique, chimique ou hybride-c 'est-à-dire un mélange de solvant physique et chimique-, utilisant une régénération du solvant par flash chaud et comprenant au moins les étapes suivantes :
- Une étape d'absorption des composés à éliminer dans un absorbeur **1** permettant la mise en contact du gaz à traiter et du solvant pauvre
- Une étape de séparation par flash à moyenne pression MP optionnelle du solvant riche dans un ballon **2** visant à désorber les composés co-absorbés (typiquement les hydrocarbures dans les applications de traitement de gaz naturel)
- Une étape d'intégration thermique mettant en oeuvre un échangeur thermique solvant riche froid / solvant pauvre chaud **3A**
- Une étape d'intégration thermique mettant en oeuvre un échangeur thermique solvant riche froid / effluent de gaz chaud **3B**
- Un prélèvement d'une fraction de flux de solvant riche froid de l'échangeur thermique solvant riche froid / solvant pauvre chaud
- Une séparation dans un ballon de flash à basse pression LP **4** optionnelle à la sortie des étapes d'intégration thermique permettant le dégazage du solvant riche
- Une étape de régénération par passage du solvant riche dans un rebouilleur **5** visant à chauffer le solvant pour régénérer le solvant à la qualité requise, suivie d'une séparation dans un ballon de flash à basse pression LP **6** permettant de séparer le solvant régénéré et les composés à éliminer sous forme de gaz désorbés
- Une condensation finale optionnelle des gaz désorbés dans un condenseur final **7** visant à limiter les pertes en eau et en solvant du procédé
- Un refroidissement final du solvant pauvre dans un refroidisseur **8**
- La circulation du solvant entre les section d'absorption et de régénération, étant permise par un ensemble de pompes de solvant (pauvre et/ou riche) **9.** Le nombre et la localisation des pompes sur la boucle de solvant peuvent varier selon le type d'application (fonction des pressions opératoires des sections d'absorption et de régénération).

La figure 2 représente un procédé d'absorption avec régénération par flash chaud classiquement utilisée pour la décarbonatation d'un gaz naturel avec mise en oeuvre d'un échangeur solvant riche / solvant pauvre.

Le procédé selon l'art antérieur comprend une étape d'absorption des composés à éliminer dudit gaz naturel dans un absorbeur **1** par mise en contact d'un flux de gaz naturel à traiter **201** et d'un flux de solvant dit « solvant pauvre » **217** pour obtenir un gaz traité **202** et un solvant enrichi en composés à éliminer dit « solvant riche » **203,** une étape de flash optionnelle du solvant riche **203** dans un ballon à moyenne pression **2** pour désorber les composés co-absorbés **206** et obtenir un solvant riche froid **204,** une étape d'échange de chaleur entre le solvant riche froid **204** et le flux de solvant pauvre chaud **210** dans un échangeur **3** pour obtenir un flux de solvant riche réchauffé **205** et un flux de solvant pauvre refroidi **215 ;** une séparation par flash **4** optionnelle permettant la séparation des composés gazeux **207** et d'un flux de solvant riche **208;** Une régénération du solvant riche **208** dans un rebouilleur **5** pour obtenir un solvant régénéré sous forme biphasique **209;** Une séparation par flash à basse pression **6** sur le solvant régénéré permettant de séparer un flux de solvant régénéré débarrassé des gaz désorbés ou « solvant pauvre chaud » **210** et un flux de gaz désorbés **211 ;** le « solvant pauvre chaud » 210 passe dans un échangeur de chaleur 8 pour son refroidissement, formant un solvant pauvre froid 216 une pompe 9 pouvant éventuellement servir à alimenter le flux de solvant dit « solvant pauvre » **217** en entrée de l'absorbeur **1.**

Une condensation finale des composés gazeux **207** et **211** qui forment un flux **212** envoyé dans un condenseur **7** pour former un flux de gaz **214.;** Un refroidissement final du solvant pauvre refroidi **215** pour obtenir un flux de solvant pauvre complètement refroidi **216** prêt à alimenter de nouveau l'absorbeur **1** sous forme d'un flux de solvant pauvre **217** à l'aide de la pompe de circulation de solvant **9.**

La Figure 3 représente un procédé d'absorption avec régénération par flash chaud de l'art antérieur proposé par Hitachi Zosen Inova (HZI) pour l'épuration d'un biogaz (élimination du CO₂).

Le procédé proposé selon l'art antérieur comprend ainsi une étape d'absorption des composés à éliminer dudit biogaz dans un absorbeur **1** par mise en contact d'un flux de biogaz à traiter **301** et d'un flux de solvant dit « solvant pauvre » **316** pour obtenir un gaz traité **302** (biométhane) et un solvant enrichi en composés à éliminer dit « solvant riche » **303.** Le flux de solvant riche **303** est envoyé à l'aide d'une pompe de circulation de solvant **9** dans un échangeur thermique solvant riche/ effluent gaz **2** où il échange de la chaleur avec le flux de gaz **312** formé des flux gazeux **311** issu d'un ballon de flash basse pression et du flux gazeux **307** issu d'une étape optionnelle de flash à basse pression **4,** pour donner un effluent gazeux refroidi **313** envoyé dans un condenseur **7** pour former le flux de sortie gaz **314** (effluent CO₂), et un flux de solvant riche réchauffé **305** qui est envoyé vers un échangeur thermique solvant riche/ solvant pauvre **3.** Il en sort un flux de solvant riche chaud **306** qui est envoyé vers une séparation par flash **4** permettant la séparation des composés gazeux **307** et d'un flux de solvant riche **308.**

Le flux de solvant riche **308** est envoyé dans un rebouilleur **5** permettant la régénération du solvant riche par chauffage pour obtenir un solvant régénéré biphasique **309.**

Le solvant régénéré **309** est ensuite soumis à une séparation par flash à basse pression **6** sur permettant de séparer un flux de solvant régénéré ou « solvant pauvre chaud » **310** et un flux de gaz désorbés **311** ;
Les composés gazeux **307 et 311** forment le flux **312** qui alimente l'échangeur thermique solvant riche/effluent gaz **2.**

Un refroidissement final du solvant pauvre refroidi **315** a lieu dans un refroidisseur **8** pour obtenir un flux de solvant pauvre complètement refroidi **316** prêt à alimenter de nouveau l'absorbeur **1.**

La Figure 4 représente les notions d'approches de température froide et chaude dans un échangeur solvant riche / solvant pauvre **1** avec (A) et sans (S) prélèvement d'une fraction de solvant (« by-pass ») côté froid.

### Description des modes de réalisation

L'invention concerne une installation de traitement de gaz **(****Figure 1****)** permettant de mettre en oeuvre le procédé selon l'invention, comprenant au moins :
- Un absorbeur **1** permettant la mise en contact du gaz à traiter et d'un solvant dit « solvant pauvre » pour obtenir un gaz traité et solvant enrichi en composés à éliminer dit « solvant riche »
- Un ballon **2** optionnel de flash à moyenne pression du solvant riche pour désorber les composés co-absorbés
- Un échangeur thermique solvant riche froid / solvant pauvre chaud **3A**
- Un échangeur thermique solvant riche froid / effluent de gaz chaud **3B**
- Une conduite de court-circuit (« by-pass ») d'une fraction du solvant riche froid alimentant l'échangeur thermique solvant riche froid / solvant riche chaud **3A** vers l'échangeur thermique solvant riche froid / effluent de gaz chaud **3B**
- Un ballon de flash à faible pression **4** optionnel à la sortie des étapes d'intégration thermique permettant le dégazage du solvant riche
- Un rebouilleur **5** visant à chauffer et régénérer le solvant à la qualité requise
   - Un ballon de flash à faible pression **6** permettant de séparer le solvant régénéré et les composés à éliminer sous forme de gaz désorbés
- Un condenseur final optionnel des gaz désorbés **7** visant à limiter les pertes en eau et en solvant du procédé
- Un refroidisseur final du solvant pauvre **8**
- Un ensemble de pompes de solvant (pauvre et/ou riche) 9 permettant la circulation du solvant entre les section d'absorption et de régénération.

La section de régénération par flash chaud de la présente invention comprend au moins le rebouilleur **5** et le ballon de flash à faible pression **6** et est intégrée thermiquement avec la section d'absorption comprenant l'absorbeur **1** grâce aux échangeurs thermiques **3A et 3B.**

Le procédé de traitement de gaz selon l'invention **(****Figure 1****)** met en oeuvre une étape a) d'absorption des composés à éliminer dudit gaz dans un absorbeur **1** par mise en contact d'un flux de gaz à traiter **101** et d'un flux de solvant pur ou très appauvri en composés à éliminer dit « solvant pauvre » **117** pour obtenir un gaz traité **102** et un solvant enrichi en composés à éliminer dit « solvant riche » **103.** Les conditions opératoires de l'étape d'absorption sont généralement les suivantes : la pression est généralement comprise entre 1 et 80 bar : pour une application de traitement de gaz naturel généralement entre 30 et 80 bar, et pour une application de purification de biogaz ou de captage de CO2 dans des fumées généralement entre 1 et 2 bar.

La température du solvant pauvre est souvent fonction de la température du gaz à traiter et des utilités froides à disposition, elle est généralement comprise entre 20 et 60°C.

Optionnellement, une étape b) de séparation par flash à moyenne pression (avantageusement conduite à une pression comprise entre 5 et 10 bar, en fonction de l'utilisation finale du gaz issu du flash moyenne pression) du solvant riche **103** dans un ballon 2 peut permettre de désorber les composés co-absorbés **106** et d'obtenir un flux de solvant riche froid **104.** Dans le cas où cette étape n'existe pas, le flux de solvant riche froid **104** est identique au flux de solvant riche **103.** La température du solvant riche froid **104** est avantageusement fonction de la quantité de gaz absorbé et de la température du solvant pauvre et du gaz à traiter et peut être comprise entre 40 et 80°C.

Ensuite, un échange de chaleur c) entre une fraction **104A** du flux de solvant riche froid **104** et le flux de solvant pauvre chaud **110** dans un échangeur **3A** permet d'obtenir un flux de solvant riche réchauffé **105A** et un flux de solvant pauvre refroidi **115.** Le solvant riche réchauffé **105A** a généralement une température comprise entre 60 et 170°C, de préférence entre 100 et 130 C; le solvant pauvre refroidi **115** a généralement une température comprise entre 45 et 90°C, de préférence entre 60 et 90°C.

Dans le même temps, une étape d'échange de chaleur d) entre la fraction complémentaire **104B** du flux de solvant riche froid et l'effluent de gaz désorbés chaud **112** correspondant au flux de gaz désorbés **111** issu de la séparation par flash de l'étape g) et au flux de composés gazeux **107** issus de la séparation par flash optionnelle de l'étape e) dans un échangeur **3B** pour obtenir un flux de solvant riche réchauffé **105B** (Le solvant riche réchauffé **105B** a généralement une température comprise entre 60 et 170°C, de préférence entre 100 et 130 C) et un flux de gaz désorbés refroidis **113,** à une température généralement comprise entre 45 et 90°C, de préférence entre 60 et 90°C.

Une étape e) de séparation par flash à basse pression **4** peut optionnellement être conduite à la sortie des étapes d'intégration thermique permettant une première séparation des composés à éliminer.

Dans le cas où cette étape n'existe pas, le flux de solvant riche **108** envoyé au rebouilleur **5** est la somme des flux de solvant riche réchauffé **105A** et **105B.**

Le procédé comprend également une étape de régénération f) du solvant riche **108** par chauffage dans un rebouilleur **5** à une température généralement comprise entre 70 et 180°C selon la pression opératoire choisie, de préférence entre 100 et 140°C, de manière très préférée entre 110 et 140°C, pour obtenir un solvant régénéré biphasique **109** comprenant les composés à éliminer sous forme de gaz désorbés, suivie d'une étape g) de séparation par flash à basse pression **6** qui permet de séparer un flux de « solvant pauvre chaud » **110** à une température généralement comprise entre 70 et 180°C, de préférence entre 110 et 140°C, et un flux de gaz désorbés **111** à la même température généralement comprise entre 70 et 180_{°}C, de préférence entre 110 et 140°C. Les étapes f) et g) permettent la régénération par flash chaud du solvant.

Le procédé comprend également une étape h) de refroidissement final du solvant pauvre refroidi **115** pour obtenir un flux de solvant pauvre complètement refroidi **116** prêt à alimenter de nouveau l'absorbeur 1 sous forme d'un flux de solvant pauvre **117** à une température généralement comprise entre 20 et 60°C selon la température du gaz à traiter 101 et les utilités froides à disposition. De manière optionnelle, le procédé peut comprendre une étape i) de condensation finale du flux de gaz désorbés **113** issus de l'échangeur solvant riche/effluent gaz **3B** visant à limiter les pertes en eau du procédé permet d'obtenir un flux **114** de composés à éliminer désorbés refroidis, généralement à une température comprise entre 20 et 60°C selon les utilités froides à disposition.

Le coeur de la présente invention repose ainsi sur la mise en oeuvre d'un prélèvement d'une fraction **104B** du flux de solvant riche du côté froid de l'échangeur thermique solvant riche froid / solvant pauvre chaud **3A** combinée à une intégration thermique adaptée utilisant les calories des flux de gaz désorbés **(107** et **111).**

Sans ce prélèvement d'une fraction du flux de solvant riche froid (« by-pass »), l'échangeur **3A** solvant riche (froid **RF,** chaud **RC)** / solvant pauvre (chaud **PC,** froid **PF) (****Figure 4****)** présenterait un pincement de température côté froid : l'approche de température côté froid (notée ΔT_{f}), généralement comprise entre 5 et 20°C selon les applications et les technologies d'échangeurs, serait plus faible que l'approche de température côté chaud (notée ΔT_{c}). Ceci s'explique simplement par le changement de phase du solvant riche s'écoulant dans la veine froide de l'échangeur (désorption des gaz absorbés et vaporisation du solvant). Le solvant pauvre s'écoulant dans la veine chaude de l'échangeur se refroidit en cédant uniquement sa chaleur sensible au solvant riche froid (pas de changement d'état). Sur la figure 4, la différence de température côté froid (ΔTf) est très inférieure à la différence de température côté chaud, sans intégration thermique au moyen de la conduite de court-circuit (ΔTc, voir courbe S). La présence de la conduite de court-circuit qui envoie une fraction du solvant riche froid vers l'échangeur 3B permet de réduire ce déséquilibre entre côté froid et côté chaud (voir courbe A).

En effet, le seul moyen de rééquilibrer les approches de température froide et chaude de l'échangeur solvant riche/solvant pauvre **3A** est de dévier (« by-pass ») une fraction du débit de solvant froid envoyé vers ledit échangeur. Cette fraction de flux de solvant riche froid **104B** peut en revanche être chauffée par les gaz désorbés chauds **111** et éventuellement **107** issus respectivement des étapes de séparation par flash **4** et **6.** L'utilisation du flux **111,** et éventuellement du flux **107,** permet d'intégrer thermiquement le procédé.

L'intégration thermique envisagée permet ainsi d'augmenter sensiblement la température du solvant riche à la sortie des échangeurs **3A** et **3B.** Cette augmentation de température se traduit par une vaporisation plus importante du solvant riche et la conséquence directe est une réduction de la consommation énergétique du rebouilleur **5.** Des gains substantiels sur la consommation énergétique de l'ordre de 20 à 40% peuvent être atteints selon les cas.

La fraction de débit de solvant riche déviée **104B** peut représenter 0,5 à 50%, de préférence de 5 à 40% du débit total de solvant riche selon les applications, le taux de charge du solvant riche (exprimé en mole de gaz acides / mole de solvant) et la technologie des échangeurs **3A** et **3B.** La fraction déviée est ajustée de manière à équilibrer les températures des deux flux de solvant riche **105A** et **105B** en sortie des échangeurs **3A** et **3B.**

D'un point de vue technologique, les échangeurs thermiques **3A** et **3B** peuvent être deux échangeurs physiquement distincts ou un seul et unique échangeur avec une multitude d'alimentations et de sorties (de type échangeurs à plaques).

La séparation par flash basse pression des étapes e) et g) est effectuée à une pression généralement comprise entre 0 et 9 bar, de préférence entre 1 et 4 bar.

La séparation par flash moyenne pression de l'étape b) est effectuée à une pression supérieure à celle de la séparation à basse pression, à une pression généralement comprise entre 3 et 10 bar, de préférence entre 5 et 10 bar, de manière très préférée entre 5 et 7 bar.

Selon un mode préféré du dispositif, les ballons de flash **4** et **6** opèrent à la même pression (aux pertes de charge près sur le circuit). La pression opératoire des ballons de flash LP **4** et **6** est avantageusement comprise entre 1 et 4 bar. La limite haute est généralement définie en fonction de la dégradation thermique du solvant utilisé. La pression opératoire du ballon de flash MP **2** est avantageusement comprise entre 5 et 10 bar

La température requise dans le rebouilleur **5** est généralement comprise entre 70 et 180°C selon la pression opératoire. De manière avantageuse, lorsque la pression est supérieure à 1 bar, la température dans le rebouilleur est comprise entre 100 et 180°C, de préférence entre 100 et 140°C, de manière très préférée entre 110 et 140°C.

La pression opératoire dans le rebouilleur **5** est généralement comprise entre 0 et 9 bar.

Dans un mode de réalisation, l'étape de régénération par flash chaud peut être effectuée sous vide, c'est-à-dire que la pression opératoire de l'étape f) dans le rebouilleur **5** et la pression de la séparation par flash de l'étape g) est strictement comprise entre 0 et 1 bar. Dans ce cas, la température de chauffage dans le rebouilleur **5** peut être inférieure à 100°C, de préférence comprise entre 70 et 90°C.

Dans un autre mode de réalisation, la pression opératoire dans le rebouilleur **5** peut être comprise entre 1 et 4 bar et la température dans le rebouilleur **5** est comprise entre 100 et 140°C, de préférence entre 110 et 140°C.

Dans encore un autre mode de réalisation, la température et la pression étant directement liées par l'équilibre thermodynamique, on peut envisager des pressions plus élevées dans les ballons de flash et le rebouilleur (pression supérieure à 4 bar, notamment comprise entre 6 et-8 bar par exemple) si le solvant est stable thermiquement ou si la dégradation du solvant est du second ordre (le remplacement plus fréquent de l'inventaire de solvant de l'installation n'est pas une contrainte économique).

Il est à noter que le coût d'investissement de l'installation selon l'invention est également limité voire réduit :
- Par rapport à un schéma avec régénération par flash conventionnel (sans intégration thermique), quelques équipements supplémentaires sont à considérer (un échangeur et un ballon)
- Par rapport à un schéma avec régénération par stripage à la vapeur, la colonne de régénération est remplacée par un simple ballon.

### EXEMPLE

Pour illustrer les avantages de l'invention en termes de consommation énergétique, un exemple est donné ci-après pour un cas d'épuration de biogaz.

Le tableau 1 ci-dessous illustre les avantages de la présente invention pour l'épuration d'un biogaz en biométhane (décarbonatation) avec un solvant chimique appelé AE Amine constitué d'un mélange d'une polyamine tertiaire, d'une amine tertiaire et d'une polyamine secondaire, comprenant notamment 25% poids de PMDPTA, 11% poids de MDEA, 4% poids de pipérazine. Pour ce type d'application, une régénération poussée par stripage à la vapeur n'est pas requise étant donné la spécification sur la teneur CO₂ visée (généralement 2.5%vol).

La contrepartie d'une régénération partielle du solvant est une augmentation du débit de solvant requis pour assurer la spécification (dans le cas présent, +23% par rapport à une régénération poussée par stripage à la vapeur). Le coût d'investissement reste malgré tout limité car la colonne de stripage est remplacée par un simple ballon et les unités d'épuration de biogaz sont de petites tailles.

Le mode de régénération par flash chaud selon l'invention et l'intégration thermique associée permettent une réduction substantielle de la puissance requise au rebouilleur pour régénérer le solvant :
- 44% par rapport au mode de régénération par flash chaud conventionnel
- 30% par rapport au mode de régénération par stripage à la vapeur

Cette réduction de consommation énergétique permet d'accroitre la productivité en biométhane du site de méthanisation, car la réglementation impose que les besoins en chaleur du procédé d'épuration soient assurés par une autoconsommation du biogaz produit.

**Tableau 1**

| **Mode régénération** | **Stripping à la vapeur (comparatif, référence 1)** | **Flash chaud classique (comparatif, référence 2)** | **Selon l'invention** |
|---|---|---|---|
| Solvant | AE-Amine | AE-Amine | AE-Amine |
| Débit solvant (Sm³/h) exprimé en conditions standard (T=15,6°C) | 16.2 | 20.0 | 20.0 |
| | | +23% | +23% |
| Alpha pauvre = taux de charge du solvant pauvre (mol gaz acides/mol amines) | 0.03 | 0.20 | 0.20 |
| Alpha riche = taux de charge du solvant riche (mol gaz acides/mol amines) | 0.46 | 0.55 | 0.55 |
| Puissance requise au rebouilleur (kWh/Nm3 biogaz) | 0.71 | 0.90 | 0.50 |
| | | *+26%* | *-30% (par rapport à la référence 1)* |
| | | | *-44% (par rapport à la référence 2)* |

## Revendications

1. Procédé de traitement de gaz par absorption chimique, physique ou hybride de composés à éliminer comprenant au moins :
a) Une étape d'absorption desdits composés à éliminer dans un absorbeur (1) par mise en contact d'un flux de gaz à traiter (101) et d'un flux de solvant à une température de préférence comprise entre 20 et 60°C, dit « solvant pauvre » (117) pour obtenir un gaz traité (102) et un solvant enrichi en composés à éliminer dit « solvant riche » (103) ;
b) Une étape de séparation optionnelle du solvant riche (103) dans un ballon de flash à moyenne pression 2 pour désorber les composés co-absorbés (106) et obtenir un solvant riche froid (104) à une température de préférence comprise entre 40 et 80°C ;
c) Une étape d'échange de chaleur entre une fraction (104A) du flux de solvant riche froid (104) ou du flux de solvant riche (103) si l'étape b) n'est pas réalisée, et le flux de solvant pauvre chaud (110) dans un échangeur thermique (3A) pour obtenir un flux de solvant riche réchauffé (105A), à une température de préférence comprise entre 60 et 170°C, de manière très préférée entre 100 et 130°C, et un flux de solvant pauvre refroidi (115) à une température de préférence comprise entre 45 et 90°C, de manière très préférée entre 60 et 90°C ;
d) Une étape d'échange de chaleur entre la fraction complémentaire (104B) du flux de solvant riche froid (104) ou du flux de solvant riche (103) si l'étape b) n'est pas réalisée, et l'effluent de gaz désorbés chaud (112) correspondant au flux de gaz désorbés (111) issu de la séparation par flash de l'étape g) et au flux de composés gazeux (107) issus de la séparation par flash optionnelle de l'étape e) dans un échangeur thermique (3B) pour obtenir un flux de solvant riche réchauffé (105B) à une température de préférence comprise entre 60 et 170°C, de manière très préférée entre 100 et 130°C,et un flux de gaz désorbés refroidis (113) à une température de préférence comprise entre 45 et 90°C, de manière très préférée entre 60 et 90°C ;
e) Une étape de séparation optionnelle dans un ballon de flash à basse pression (4) des flux de solvant riche réchauffé (105A) et (105B) à la sortie des étapes d'intégration thermique permettant la séparation des composés gazeux (107) à une température de préférence comprise entre 60 et 170°C, de manière très préférée entre 100 et 130°C et d'un flux de solvant riche (108), à une température de préférence comprise entre 60 et 170°C, de manière très préférée entre 100 et 130°C ;
f) Une étape de régénération du solvant riche (108) ou de la somme des flux de solvant riche réchauffé (105A) et (105B) si l'étape e) n'est pas réalisée par chauffage dans un rebouilleur (5) à une température comprise de préférence entre 70 et 180°C pour obtenir un solvant régénéré biphasique (109) ;
g) Une étape de séparation dans un ballon de flash à basse pression 6 du solvant régénéré biphasique (109) permettant de séparer un flux de solvant pauvre chaud (110) à une température de préférence comprise entre 70 et 180°C, de manière très préférée entre 110 et 140°C et un flux gazeux comprenant les composés à éliminer sous forme de gaz désorbés (111) à une température de préférence comprise entre 70 et 180°C, de manière très préférée entre 110 et 140°C ;
h) Un refroidissement final du solvant pauvre refroidi (115) pour obtenir un flux de solvant pauvre complètement refroidi (116) à une température de préférence comprise entre 20 et 60°C prêt à alimenter de nouveau l'absorbeur (1) sous forme d'un flux de solvant pauvre (117).

2. Procédé selon la revendication 1 dans lequel la fraction (104A) du flux de solvant riche froid envoyée dans l'échangeur thermique (3A) représente entre 0,5% et 50% poids, de préférence entre 5 et 40% poids du flux total de solvant riche.

3. Procédé selon l'une des revendications précédentes dans lequel la séparation dans le ballon de flash moyenne pression de l'étape b) est effectuée à une pression supérieure à celle de la séparation dans le ballon de flash basse pression, comprise entre 3 et 10 bar, de préférence entre 5 et 10 bar, de manière très préférée entre 5 et 7 bar.

4. Procédé selon l'une des revendications précédentes dans lequel la séparation dans le ballon de flash basse pression des étapes e) et g) est effectuée à une pression comprise entre 0 et 9 bar, de préférence entre 1 et 4 bar.

5. Procédé selon la revendication 4 dans lequel la séparation dans les ballons de flash basse pression des étapes e) et g) est effectuée à la même pression comprise entre 1 et 4 bar et la séparation dans le ballon de flash moyenne pression de l'étape b) est effectuée à une pression comprise entre 5 et 10 bar.

6. Procédé selon la revendication 4 dans lequel le chauffage dans le rebouilleur de l'étape f) et la séparation dans le ballon de flash basse pression de l'étape g) sont effectués à une pression strictement comprise entre 0 et 1 bar.

7. Procédé selon la revendication 6 dans lequel la température dans le rebouilleur est comprise entre 70 et 100°C.

8. Procédé selon l'une des revendications 4 ou 5 dans lequel la pression opératoire dans le rebouilleur est comprise entre 1 et 9 bar, de préférence entre 1 et 4 bar, et dans lequel la température dans le rebouilleur est comprise entre 100 et 140°C, de préférence entre 110 et 140°C.

9. Procédé selon l'une des revendications précédentes dans lequel le solvant est un solvant chimique comprenant au moins une amine.

10. Procédé selon la revendication 9 dans lequel le solvant comprend un mélange d'amines tertiaires et secondaires.

11. Procédé selon l'une des revendications précédentes comprenant une étape i) de condensation finale du flux de gaz désorbés (113) visant à limiter les pertes en eau du procédé permettant d'obtenir un flux (114) de composés désorbés refroidis, à une température de préférence comprise entre 20 et 60°C.

12. Procédé selon l'une des revendications précédentes dans lequel dans l'étape d'absorption a) la pression opératoire est comprise entre 1 et 80 bar.

13. Procédé selon l'une des revendications précédentes dans lequel le gaz à traiter est choisi parmi un biogaz, un gaz naturel, un gaz de synthèse (syngas), ou des fumées industrielles, par exemple des fumées de centrale à charbon, d'incinérateur ou de hauts fourneaux.

14. Installation de traitement de gaz permettant la mise en oeuvre du procédé selon l'une des revendications précédentes comprenant au moins :
- Un absorbeur (1) permettant la mise en contact du gaz à traiter et d'un solvant dit « solvant pauvre » pour obtenir un gaz traité et solvant enrichi en composés à éliminer dit « solvant riche » ;
- Un ballon (2) optionnel de flash à moyenne pression du solvant riche pour désorber les composés co-absorbés ;
- Un échangeur thermique solvant riche froid / solvant pauvre chaud (3A) ;
- Un échangeur thermique solvant riche froid / effluent de gaz chaud (3B) ;
- Une conduite de court-circuit d'une fraction du solvant riche froid alimentant l'échangeur thermique solvant riche froid / solvant riche chaud (3A) vers l'échangeur thermique solvant riche froid / effluent de gaz chaud (3B) ;
- Un ballon de flash à faible pression (4) optionnel à la sortie des étapes d'intégration thermique permettant le dégazage du solvant riche ;
- Un rebouilleur (5) permettant de chauffer le solvant riche ;
- Un ballon de flash à faible pression (6) permettant de séparer le solvant régénéré et les composés à éliminer sous forme de gaz désorbés ;
- Un condenseur final (7) optionnel des gaz désorbés visant à limiter les pertes en eau et en solvant du procédé ;
- Un refroidisseur final (8) du solvant pauvre ;
- Un ensemble de pompes de solvant (pauvre et/ou riche) (9) permettant la circulation du solvant.

15. Installation selon la revendication 14 dans laquelle l'échangeur thermique (3A) et l'échangeur thermique (3B) sont constitués par un seul et même appareil.

## Patentansprüche

1. Verfahren zum Behandeln von Gas durch chemische, physikalische oder hybride Absorption von zu entfernenden Verbindungen, umfassend mindestens:
a) Einen Schritt der Absorption der zu entfernenden Verbindungen in einem Absorber (1) durch Kontaktieren eines zu behandelnden Gasstroms (101) und eines Lösungsmittelstroms mit einer Temperatur von bevorzugt zwischen 20 und 60 °C, "mageres Lösungsmittel" (117) genannt, um ein behandeltes Gas (102) und ein an zu entfernenden Verbindungen angereichertes Lösungsmittel, "reiches Lösungsmittel" (103) genannt, zu erhalten;
b) Einen optionalen Schritt des Trennens des reichen Lösungsmittels (103) in einer Mitteldruck-Entspannungstrommel 2, um die co-absorbierten Verbindungen (106) zu desorbieren und ein kaltes reiches Lösungsmittel (104) mit einer Temperatur von bevorzugt zwischen 40 und 80 °C zu erhalten;
c) Einen Schritt des Wärmeaustauschs zwischen einer Fraktion (104A) des Stroms aus kaltem reichem Lösungsmittel (104) oder des Stroms aus reichem Lösungsmittel (103), falls der Schritt b) nicht ausgeführt wird, und dem Strom aus heißem magerem Lösungsmittel (110) in einem Wärmetauscher (3A), um einen Strom aus wiedererwärmtem reichem Lösungsmittel (105A) mit einer Temperatur von bevorzugt zwischen 60 und 170 °C, besonders bevorzugt zwischen 100 und 130 °C, und einen Strom aus abgekühltem magerem Lösungsmittel (115) mit einer Temperatur von bevorzugt zwischen 45 und 90 °C, besonders bevorzugt zwischen 60 und 90 °C, zu erhalten;
d) Einen Schritt des Wärmeaustauschs zwischen der komplementären Fraktion (104B) des Stroms aus kaltem reichem Lösungsmittel (104) oder des Stroms aus reichem Lösungsmittel (103), falls der Schritt b) nicht ausgeführt wird, und dem heißen Abstrom aus desorbierten Gasen (112), der dem Strom aus desorbierten Gasen (111) entspricht, der aus der Trennung durch Entspannen des Schritts g) hervorgegangen ist, und dem Strom aus gasförmigen Verbindungen (107), die aus der optionalen Trennung durch Entspannen des Schritts e) hervorgegangen sind, in einem Wärmetauscher (3B), um einen Strom aus wiedererwärmtem reichem Lösungsmittel (105B) mit einer Temperatur von bevorzugt zwischen 60 und 170 °C, besonders bevorzugt zwischen 100 und 130 °C, und einen Strom aus abgekühlten desorbierten Gasen (113) mit einer Temperatur von bevorzugt zwischen 45 und 90 °C, besonders bevorzugt zwischen 60 und 90 °C, zu erhalten;
e) Einen optionalen Schritt des Trennens in einer Niederdruck-Entspannungstrommel (4) der Ströme aus wiedererwärmtem reichem Lösungsmittel (105A) und (105B) am Ausgang der Schritte zur thermischen Integration, der das Trennen der gasförmigen Verbindungen (107) mit einer Temperatur von bevorzugt zwischen 60 und 170 °C, besonders bevorzugt zwischen 100 und 130 °C, und eines Stroms aus reichem Lösungsmittel (108) mit einer Temperatur von bevorzugt zwischen 60 und 170 °C, besonders bevorzugt zwischen 100 und 130 °C, ermöglicht;
f) Einen Schritt des Regenerierens des reichen Lösungsmittels (108) oder der Summe der Ströme aus wiedererwärmtem reichem Lösungsmittel (105A) und (105B), falls der Schritt e) nicht ausgeführt wird, durch Erhitzen in einem Reboiler (5) auf eine Temperatur von bevorzugt zwischen 70 und 180 °C, um ein zweiphasiges regeneriertes Lösungsmittel (109) zu erhalten;
g) Einen Schritt des Trennens in einer Niederdruck-Entspannungstrommel 6 des zweiphasigen regenerierten Lösungsmittels (109), der es ermöglicht, einen Strom aus heißem magerem Lösungsmittel (110) mit einer Temperatur von bevorzugt zwischen 70 und 180 °C, besonders bevorzugt zwischen 110 und 140 °C, und einen gasförmigen Strom, der die zu entfernenden Verbindungen in Form von desorbierten Gasen (111) mit einer Temperatur von bevorzugt zwischen 70 und 180 °C, besonders bevorzugt zwischen 110 und 140 °C, umfasst, zu trennen;
h) Ein abschließendes Abkühlen des abgekühlten mageren Lösungsmittels (115), um einen Strom aus vollständig abgekühltem magerem Lösungsmittel (116) mit einer Temperatur von bevorzugt zwischen 20 und 60 °C zu erhalten, der bereit ist, dem Absorber (1) in Form eines Stroms aus magerem Lösungsmittel (117) erneut zugeführt zu werden.

2. Verfahren nach Anspruch 1, bei dem die Fraktion (104A) des Stroms aus kaltem reichem Lösungsmittel, die in den Wärmetauscher (3A) geleitet wird, zwischen 0,5 und 50 Gew.-%, bevorzugt zwischen 5 und 40 Gew.-%, des Gesamtstroms aus reichem Lösungsmittel ausmacht.

3. Verfahren nach einem der vorhergehenden Ansprüche, bei dem das Trennen in der Mitteldruck-Entspannungstrommel des Schritts b) bei einem Druck durchgeführt wird, der höher als der des Trennens in der Niederdruck-Entspannungstrommel ist und zwischen 3 und 10 bar, bevorzugt zwischen 5 und 10 bar, besonders bevorzugt zwischen 5 und 7 bar beträgt.

4. Verfahren nach einem der vorhergehenden Ansprüche, bei dem das Trennen in der Niederdruck-Entspannungstrommel der Schritte e) und g) bei einem Druck zwischen 0 und 9 bar, bevorzugt zwischen 1 und 4 bar, durchgeführt wird.

5. Verfahren nach Anspruch 4, bei dem das Trennen in den Niederdruck-Entspannungstrommeln der Schritte e) und g) bei dem gleichen Druck zwischen 1 und 4 bar durchgeführt wird und das Trennen in der Mitteldruck-Entspannungstrommel des Schritts b) bei einem Druck zwischen 5 und 10 bar durchgeführt wird.

6. Verfahren nach Anspruch 4, bei dem das Erhitzen i dem Reboiler des Schritts f) und das Trennen in der Niederdruck-Entspannungstrommel des Schritts g) bei einem Druck strikt zwischen 0 und 1 bar durchgeführt werden.

7. Verfahren nach Anspruch 6, bei dem die Temperatur in dem Reboiler zwischen 70 und 100 °C beträgt.

8. Verfahren nach einem der Ansprüche 4 oder 5, bei dem der Betriebsdruck in dem Reboiler zwischen 1 und 9 bar, bevorzugt zwischen 1 und 4 bar, beträgt und bei dem die Temperatur in dem Reboiler zwischen 100 und 140 °C, bevorzugt zwischen 110 und 140 °C, beträgt.

9. Verfahren nach einem der vorhergehenden Ansprüche, bei dem das Lösungsmittel ein chemisches Lösungsmittel ist, das mindestens ein Amin umfasst.

10. Verfahren nach Anspruch 9, bei dem das Lösungsmittel ein Gemisch aus tertiären und sekundären Aminen ist.

11. Verfahren nach einem der vorhergehenden Ansprüche, umfassend einen Schritt i) der abschließenden Kondensation des Stroms aus desorbierten Gasen (113), der darauf abzielt, die Wasserverluste des Verfahrens zu begrenzen, was es ermöglicht, einen Strom (114) aus abgekühlten desorbierten Verbindungen mit einer Temperatur von bevorzugt zwischen 20 und 60 °C zu erhalten.

12. Verfahren nach einem der vorhergehenden Ansprüche, bei dem in dem Schritt der Absorption a) der Betriebsdruck zwischen 1 und 80 bar beträgt.

13. Verfahren nach einem der vorhergehenden Ansprüche, bei dem das zu behandelnde Gas unter einem Biogas, einem Erdgas, einem Synthesegas (Syngas) oder industriellen Rauchgasen, zum Beispiel Kohlekraftwerks-, Verbrennungsanlagen- oder Hochofenrauchgasen, gewählt ist.

14. Gasbehandlungsanlage, die die Durchführung des Verfahrens nach einem der vorhergehenden Ansprüche ermöglicht, umfassend mindestens:
- Einen Absorber (1), der das Kontaktieren des zu behandelnden Gases und eines Lösungsmittels, "mageres Lösungsmittel" genannt, ermöglicht, um ein an zu entfernenden Verbindungen angereichertes Lösungsmittel, "reiches Lösungsmittel" genannt, zu erhalten;
- Eine optionale Mitteldruck-Entspannungstrommel (2) für das reiche Lösungsmittel, um die co-absorbierten Verbindungen zu desorbieren;
- Einen Wärmetauscher kaltes reiches Lösungsmittel / heißes mageres Lösungsmittel (3A);
- Einen Wärmetauscher kaltes reiches Lösungsmittel / Abstrom aus heißem Gas (3B);
- Eine Umgehungsleitung für eine Fraktion des kalten reichen Lösungsmittels, die den Wärmetauscher kaltes reiches Lösungsmittel / heißes reiches Lösungsmittel (3A) zu dem Wärmetauscher kaltes reiches Lösungsmittel / Abstrom aus heißem Gas (3B) hin versorgt;
- Eine optionale Niederdruck-Entspannungstrommel (4) am Ausgang der Schritte zur thermischen Integration, die das Entgasen des reichen Lösungsmittels ermöglicht;
- Einen Reboiler (5), der es ermöglicht, das reiche Lösungsmittel zu erhitzen;
- Eine Niederdruck-Entspannungstrommel (6), die es ermöglicht, das regenerierte Lösungsmittel und die zu entfernenden Verbindungen in Form von desorbierten Gasen zu trennen;
- Einen optionalen abschließenden Kondensator (7) für die desorbierten Gase, der darauf abzielt, die Wasser- und Lösungsmittelverluste des Verfahrens zu begrenzen;
- Einen abschließenden Kühler (8) für das magere Lösungsmittel;
- Eine Pumpenanordnung für Lösungsmittel (mager und/oder reich) (9), die die Zirkulation des Lösungsmittels ermöglicht.

15. Anlage nach Anspruch 14, bei welcher der Wärmetauscher (3A) und der Wärmetauscher (3B) aus ein und demselben Gerät bestehen.

## Claims

1. Method for treating gas by chemical, physical or hybrid absorption of compounds for removal, comprising at least:
a) a step of absorption of said compounds for removal in an absorber (1) by contacting a stream of gas for treatment (101) with a solvent stream at a temperature of preferably between 20 and 60°C, called "depleted solvent" (117), to give a treated gas (102) and a solvent enriched in compounds for removal, called "rich solvent" (103) ;
b) a step of optional separation of the rich solvent (103) in a medium-pressure flash vessel 2 to desorb the coabsorbed compounds (106) and give a cold rich solvent (104) at a temperature preferably of between 40 and 80°C;
c) a step of heat exchange between a fraction (104A) of the cold rich solvent stream (104), or of the rich solvent stream (103) if step b) is not carried out, and the hot depleted solvent stream (110) in a heat exchanger (3A) to give a reheated rich solvent stream (105A), at a temperature preferably of between 60 and 170°C, very preferably between 100 and 130°C, and a cooled depleted solvent stream (115) at a temperature preferably of between 45 and 90°C, very preferably between 60 and 90°C;
d) a step of heat exchange between the complementary fraction (104B) of the cold rich solvent stream (104), or of the rich solvent stream (103) if step b) is not carried out, and the hot desorbed gas effluent (112) corresponding to the desorbed gas stream (111) from the flash separation in step g) and to the gaseous compound stream (107) from the optional flash separation in step e) in a heat exchanger (3B) to give a reheated rich solvent stream (105B) at a temperature preferably of between 60 and 170°C, very preferably between 100 and 130°C, and a cooled desorbed gas stream (113) at a temperature preferably of between 45 and 90°C, very preferably between 60 and 90°C;
e) a step of optional separation in a low-pressure flash vessel (4) of the reheated rich solvent streams (105A) and (105B) at the exit of the thermal integration steps, enabling the separation of the gaseous compounds (107) at a temperature preferably of between 60 and 170°C, very preferably between 100 and 130°C, and a rich solvent stream (108), at a temperature preferably of between 60 and 170°C, very preferably between 100 and 130°C;
f) a step of regeneration of the rich solvent (108), or of the whole of the reheated rich solvent streams (105A) and (105B) if step e) is not carried out, by heating in a reboiler (5) at a temperature preferably of between 70 and 180°C to give a biphasic regenerated solvent (109);
g) a step of separation in a low-pressure flash vessel 6 of the biphasic regenerated solvent (109), enabling the separation of a hot depleted solvent stream (110) at a temperature preferably of between 70 and 180°C, very preferably between 110 and 140°C, and a gaseous stream comprising the compounds for removal in desorbed gas form (111), at a temperature preferably of between 70 and 180°C, very preferably between 110 and 140°C;
h) a final cooling of the cooled depleted solvent (115) to give a fully cooled depleted solvent stream (116) at a temperature preferably of between 20 and 60°C ready to be fed again to the absorber (1) in the form of a depleted solvent stream (117).

2. Method according to Claim 1, wherein the fraction (104A) of the cold rich solvent stream sent to the heat exchanger (3A) represents between 0.5% and 50% by weight, preferably between 5% and 40% by weight of the total rich solvent stream.

3. Method according to one of the preceding claims, wherein the separation in the medium-pressure flash vessel in step b) is performed at a higher pressure than the separation in the low-pressure flash vessel, of between 3 and 10 bar, preferably between 5 and 10 bar, very preferably between 5 and 7 bar.

4. Method according to one of the preceding claims, wherein the separation in the low-pressure flash vessel in steps e) and g) is performed at a pressure of between 0 and 9 bar, preferably between 1 and 4 bar.

5. Method according to Claim 4, wherein the separation in the low-pressure flash vessels in steps e) and g) is performed at the same pressure of between 1 and 4 bar and the separation in the medium-pressure flash vessel in step b) is performed at a pressure of between 5 and 10 bar.

6. Method according to Claim 4, wherein the heating in the reboiler in step f) and the separation in the low-pressure flash vessel in step g) are performed at a pressure strictly of between 0 and 1 bar.

7. Method according to Claim 6, wherein the temperature in the reboiler is between 70 and 100°C.

8. Method according to one of Claims 4 or 5, wherein the operating pressure in the reboiler is between 1 and 9 bar, preferably between 1 and 4 bar, and wherein the temperature in the reboiler is between 100 and 140°C, preferably between 110 and 140°C.

9. Method according to one of the preceding claims, wherein the solvent is a chemical solvent comprising at least one amine.

10. Method according to Claim 9, wherein the solvent comprises a mixture of tertiary and secondary amines.

11. Method according to one of the preceding claims, comprising a step i) of final condensation of the desorbed gas stream (113) with the aim of limiting the water losses in the method, so as to give a stream (114) of cooled desorbed compounds, at a temperature of preferably between 20 and 60°C.

12. Method according to one of the preceding claims, wherein the operating pressure in the absorption step a) is between 1 and 80 bar.

13. Method according to one of the preceding claims, wherein the gas for treatment is selected from a biogas, a natural gas, a synthesis gas (syngas), or industrial flue gases, for example coal power station, incinerator or blast furnace flue gases.

14. Gas treatment plant allowing implementation of the method according to one of the preceding claims, comprising at least:
- an absorber (1) allowing the gas for treatment to be contacted with a solvent referred to as "depleted solvent" to give a treated gas and solvent enriched in compounds for removal, called "rich solvent";
- an optional vessel (2) for medium-pressure flashing of the rich solvent to desorb the coabsorbed compounds;
- a cold rich solvent/hot depleted solvent heat exchanger (3A);
- a cold rich solvent/hot gas effluent heat exchanger (3B) ;
- a conduit for short-circuiting a fraction of the cold rich solvent feeding the cold rich solvent/hot rich solvent heat exchanger (3A) to the cold rich solvent/hot gas effluent heat exchanger (3B);
- an optional low-pressure flash vessel (4) at the exit of the thermal integration steps, enabling the degassing of the rich solvent;
- a reboiler (5) enabling heating of the rich solvent;
- a low-pressure flash vessel (6), enabling separation of the regenerated solvent and the compounds for removal in desorbed gas form;
- an optional final condenser (7) for the desorbed gases, with the aim of limiting the water and solvent losses in the method;
- a final cooler (8) for the depleted solvent;
- a set of pumps for (depleted and/or rich) solvent (9), enabling the circulation of the solvent.

15. Plant according to Claim 14, wherein the heat exchanger (3A) and the heat exchanger (3B) consist of one and the same apparatus.
